# EUROPÄISCHE PATENTANMELDUNG

(11) **EP 3 611 587 A1**
(43) Veröffentlichungstag der Anmeldung: **19.02.2020**
(21) Anmeldenummer: 18189252.2
(22) Anmeldetag: 16.08.2018
(51) Int. Cl.: G05B 19/418, G05B 19/042, G05B 19/05

(54) **SYSTEM ZUR STEUERUNG UND ÜBERWACHUNG VON ADAPTIVEN CYBER-PHYSIKALISCHEN SYSTEMEN**

(71) Anmelder: Siemens Aktiengesellschaft, 80333 München (DE)
(72) Erfinder: Schmid, Reiner, 80538 München (DE)

(57) **Zusammenfassung**

Ein System (100) zur Überwachung und Steuerung eines adaptiven cyber-physikalischen Systems (200) bestehend aus einer oder mehreren Systemkomponenten (220, 230, 240, ... N), bei dem ein Engineering-System (300) mit einem Monitoring- und Kontrollmodul (400) verbunden ist, das ausgebildet ist, Daten von den Systemkomponenten (220, 230, 240, ... N) zu erhalten und zu verarbeiten und die verarbeiteten Daten und daraus generierte Informationen an das Engineering-System (300) weiterzugeben, wobei das Engineering-System (300) ausgebildet ist, aufgrund der vom Monitoring- und Kontrollmodul (400) erhaltenen Daten Leittechnikbilder in einem Leit- und Steuersystem (500) zu aktualisieren.

## Beschreibung

Die Erfindung betrifft ein System zur Überwachung und Steuerung eines adaptiven cyber-physikalischen Systems bestehend aus einer oder mehreren Systemkomponenten.

Die Erstellung von modernen automatisierten Anlagen, wie zum Beispiel Produktionszellen in der Automobilindustrie oder in jeder beliebigen anderen Produktionsanlage, basiert auf dem Konzept von cyber-physikalischen Systemen (Cyber-Physical Systems). Ein cyber-physikalisches System bezeichnet den Verbund informatischer, softwaretechnischer Komponenten mit mechanischen und elektronischen Elementen, die über eine Dateninfrastruktur, wie zum Beispiel das Internet kommunizieren und ist durch einen hohen Grad an Komplexität gekennzeichnet. Die Ausbildung von cyber-physikalischen Systemen entsteht aus der Vernetzung eingebetteter Systemkomponenten durch drahtgebundene oder drahtlose Kommunikationsnetze. Cyber-physikalische Systeme decken ein breites Spektrum möglicher Bereiche ab, in denen sie zum Einsatz kommen können. Hierzu gehören medizintechnische Geräte und Systeme, Verkehrssteuerungs- und Verkehrslogistiksysteme, vernetzte Sicherheitssowie Fahrassistenzsysteme im Automobilbereich, industrielle Prozesssteuerung- und Automatisierungssysteme in der Fertigung, Energieversorgungsmanagementsysteme, Infrastruktursysteme für Telekommunikation, etc.

Das Design von cyber-physikalischen Systemen erfordert die Integration von unterschiedlichen Komponenten auf verschiedenen Ebenen zu einem Gesamtsystem, insbesondere Komponenten der physikalischen und elektrischen Ebene. Ferner gibt es netzwerktechnische Anforderungen, die erfüllt werden müssen. Des Weiteren ist eine Ereignis- und Datenflussintegration erforderlich. Weiterhin sind physikalisch-prozessuale Anforderungen zu beachten, schließlich sind die einzelnen Komponenten auch in eine Steuerungshierarchie (Control Hierarchy) einzubetten.

Darüber hinaus ist zu beobachten, dass Informationstechnologien (IT) immer mehr in Bereiche vordringen, in denen diese in der Vergangenheit kaum eine Rolle gespielt haben. Dieser Trend stellt mittlerweile einen der größten Innovationstreiber dar. In Alltagsgegenstände eingebettete Computer, die miteinander oder dem Internet vernetzt sind, ermöglichen erstmals neuartige Funktionen wie zum Beispiel Funktionen für Assistenzsysteme in einem Fahrzeug. Cyber-physikalische Systeme stellen die technologische Basis für die Kombination von IT mit der physikalischen Welt dar und spielen in immer mehr Bereichen, wie zum Beispiel Automotive, Luftfahrt, Transport, Energie, Produktion, Gesundheit, Infrastruktur aber auch Unterhaltung eine wichtige Rolle.

Die wachsende Beliebtheit und Verbreitung von cyber-physikalischen Systemen sowie die Tatsache, dass diese vermehrt zur Verarbeitung und Speicherung sicherheitskritischer und datenschutzsensitive Daten eingesetzt werden, macht diese Systeme jedoch auch zu attraktiven Zielen für verschiedene Software- und Hardwareangriffe. Erfolgreiche Angriffe können erhebliche Auswirkungen haben, insbesondere im Automotive oder medizinischen Umfeld.

Der praktische Einsatz von cyber-physikalischen Systemen, insbesondere in sicherheitskritischen Anwendungsbereichen, erfordert eine sorgfältige Berücksichtigung von Sicherheits- und Datenschutzaspekten bereits beim Entwurf dieser Systeme (Security and Privacy by Design).

Berücksichtigt werden muss sowohl die Plattform-Sicherheit als auch die Sicherheit der verschiedenen Kommunikationsverbindungen sowie die Sicherheit auf Anwendungs-, Architektur- und Technologieebene. Geeignete software- und hardwarebasierte Lösungen müssen dabei die spezifischen Anforderungen von cyber-physikalischen System erfüllen, zum Beispiel Ressourcenbeschränkungen bestimmter Geräte, physikalische Zugreifbarkeit, Echtzeitanforderungen für bestimmte Funktionen oder Kosteneffizienz. Auch finden sich cyber-physikalische Systeme oft in Bereichen, die mit der IT-Welt bisher nicht oder nur wenig verknüpft waren. Bestehende Schutzmaßnahmen und herkömmliche IT-Sicherheitskonzepte haben sich in der Praxis deshalb als unzureichend erwiesen. Oft sind spezielle Anpassungen oder Neuentwicklungen erforderlich.

Daher muss die multi-dimensionale Integration von Einzelkomponenten in ein Gesamtsystem sowohl der Zielbestimmung des Systems (Anforderungen) genügen, insbesondere aber auch nicht-funktionale Randbedingungen, wie z.B. Sicherheit und Datenschutz, erfüllen und zudem Nachweisbarkeitsgarantien für die Eigenschaften der Einzelkomponenten bieten. In der industriellen Praxis sind solche Systeme beispielsweise automatisierte Fertigungs- und Prozessanlagen für die Produktion eines Produktes basierend auf speicherprogrammierbaren Steuerungen (PLCs), bei denen ein Großteil der Abläufe computergesteuert umgesetzt wird. Nach der Phase des Produktdesigns wird üblicherweise die Produktionsplanung vorgenommen. Hierzu erfolgt ein Produktionsengineering, bei dem die Mechanik, Elektrik und Automatisierung der Produktionsanlage festgelegt werden. Nach der Simulation des Produktionsengineering am Computer wird in der Regel eine solche Produktionsanlage in Betrieb genommen. Während der Produktionsausführung wird die Gesamtanlage mittels eines Leit- und Steuersystems (SCADA System) gesteuert und überwacht. SCADA Softwaresysteme ermöglichen Prozessvisualisierungen mit graphischen Abbildungen von Teil- und/oder Gesamtprozessen, um aktuelle Systemzustände übersichtlich und anschaulich darzustellen. Diese graphischen Darstellungen können vom Anwender bzw. dem Betreiber einer Anlage schnell realisiert werden. Historische Datenverwaltung, benutzerspezifisches Rechtehandling, Alarmierung bei kritischen Systemzuständen sind als standardisierte Tools integriert.

Die Konfiguration und Programmierung solcher Produktionssysteme erfolgt mithilfe eines Engineering-Systems, das die für das Funktionieren des Systems notwendigen Konfigurationsdaten und Informationen über die technischen Abläufe im System bereitstellt. Darauf aufbauend wird das Leit- und Steuersystem (SCADA System) konfiguriert oder zumindest die Schnittstellen für dessen Anwendung bereitstellt. Ein solches Engineering-System ist beispielsweise das TIA Portal (Totally Integrated Automation Portal) mit seinen Einbindungen von gerätespezifischen Applikationen, wie z.B. Compiler für PLCs, Editoren für Bildschirmdarstellungen und Bildschirmmasken, Panels und/oder Leit-und Steuersysteme (SCADA-Systeme).

Mithilfe des Engineering-Systems erfolgt anhand festgelegter Anwendungsszenarien die Integration unterschiedlicher Geräte in ein Gesamtsystem. Ein Beispiel ist die Integration aller PLCs einer Produktionszelle in einer Fabrik in den Gesamtablauf der Gesamtproduktion. Andere Beispiele finden sich im medizinischen Bereich wie dem Krankenhausmanagement oder im Automotivebereich bei Antriebssystemen und Fahrassistenzsystemen.

In dem Engineering-System werden auch Funktionalitäten wie die Fehlererkennung und die Überwachung von Laufzeit- und Ablauffunktionalität, die üblicherweise Bestandteile des Laufzeitsystems sind, definiert.

Es ist jedoch in Zukunft zu erwarten, dass durch die Anwendung von Verfahren der künstlichen Intelligenz sowie durch den Einsatz von sogenannten komplexen adaptiven Systemen, die sich durch autonomes Verhalten und Lernfähigkeit auszeichnen, die Leistungsfähigkeit solcher cyber-physikalischer Systeme deutlich gesteigert werden kann.

Komplexe adaptive Systeme sind komplex, weil sie aus mehreren zusammenhängenden Elementen bestehen, und sie sind adaptiv, weil sie ein besonderes Anpassungsvermögen an ihre Umwelt zeigen und die Möglichkeit haben, (aus Erfahrung) zu lernen. Allerdings stellt die Verwendung von sogenannten adaptiven Systemen, bei denen das Verhalten eines Systems nicht mehr während einer Engineering-Phase vor dem Betriebseinsatz im Detail festgelegt wird, sondern durch selbst-lernende Mechanismen realisiert wird, eine neue Anforderung an das Engineering-System dar.

Bei der Erstellung von adaptiven cyber-physikalischen Systemen kann aufgrund ihrer Dynamik (autonome Rekonfiguration) und Komplexität (Heterogenität und Anzahl der beteiligten Komponenten) keine vollständige Erstellung dieser Funktionalitäten vor der Inbetriebnahme des Systems erfolgen, da die Anzahl der Variationen (Variationsraum) der Konfigurationen nicht überschaubar ist und z.T. auch nicht mehr darstellbar ist. Für adaptive cyber-physikalische Systeme gilt der Grundsatz der Emergenz, da sich neue Eigenschaften und Strukturen eines Systems erst infolge eines neuen Zusammenspiels seiner Elemente bildet. Beispiele sind eine zunehmende Personalisierung in der Produktion, um individuelle Kundenwünsche zu berücksichtigen, aber auch der Trend zu einer personalisierten Medizin im medizinischen Bereich, wo Medikamente immer stärker auf die individuellen Bedürfnisse eines Patienten zugeschnitten werden.

In der Fahrzeugproduktion ist es beispielsweise denkbar, dass individuell konfigurierte Fahrzeugausstattungen (z.B. Farbe, Stoffe, etc.) direkt an eine Produktionsanlage weitergegeben werden. So sind geänderte Produktionsabläufe anhand der eingehenden Kundenwünsche, beispielsweise hinsichtlich der Farbwahl eines Fahrzeugs, denkbar, die bisher aus logistischen und organisatorischen Gründen nicht möglich waren. Hierdurch können neue Abläufe anhand der eingehenden Daten generiert werden, die bisher nur linear, beispielsweise anhand des zeitlichen Eingangs der Kundenwünsche, bearbeitet worden wären. In einem adaptiven System können jedoch andere und neue Zusammenhänge erstellt werden, die dann zu geänderten Produktionsabläufen führen, die wiederum die Effizienz der Gesamtproduktion steigern können. Durch den Einsatz adaptiver Systeme, wie beispielsweise sich selbst organisierende Roboter, nimmt die Variabilität der Abläufe zu, und sie ist insbesondere nicht mehr im Vorhinein planbar, sondern unterliegt einer nichtlinearen, dynamischen Steuerung. An Stelle einer ablaufgenauen Spezifikation tritt die Festlegung von Zielgrößen, Verhaltensleitlinien oder ähnliches, sowie die Spezifikation durch Lerndaten.

Traditionelle Engineering Systeme, wie beispielsweise das erwähnte TIA Portal, können allerdings diese Art von Systemen nicht unterstützen, da sie auf zuvor festgelegten, im Wesentlichen linear ablaufenden Prozessen beruhen. Es besteht daher der Bedarf, diese Engineering Systeme um die Möglichkeiten, die sich durch den Einsatz von adaptiv Systemen ergeben, zu erweitern. Umgekehrt benötigt jedoch auch beispielsweise eine Fabrikautomatisierung, die auf adaptiven Einheiten beruht, zum Beispiel cyber-physikalische Produktionseinheiten (cyber physical production units), die Anbindung an ein klassisches Leittechniksystem, das den Betreibern die Möglichkeit der Überwachung und des Eingriffes bietet.

Es werden somit an Engineering-Systeme, die gegenwärtig erhältlich sind, neue Anforderungen gestellt, da einerseits ein nicht im Voraus festgelegter Variantenraum an Konfigurationsmöglichkeiten unterstützt werden soll, gleichzeitig aber ein Abbild des Systemzustands geliefert werden soll, das in Anbetracht der Zielsetzungen in der Lage ist, den Betreibern des Systems einen geeigneten Überblick über die relevanten Informationen und Handlungsmöglichkeiten zu geben.

Auf der Basis der im Engineering-System hinterlegten Informationen über das System wird herkömmlicherweise eine Anbindung an Leittechniksysteme erstellt, d.h., aufgrund dieser Datenbasis werden Leittechnikbilder zur Anzeige des Systemzustands definiert. Hier stellt sich nun allerdings das Problem, dass aufgrund der großen Vielzahl an möglichen Varianten, die ein adaptives System während des Betriebs einnehmen kann, solche Leittechnikbilder nicht mehr sinnvoll statisch erstellt werden können.

Für autonome adaptive Systeme besteht die Herausforderung, dass die Engineering-Systeme als auch die Leittechniksysteme die Rekonfigurationsmöglichkeiten und damit die notwendigen Änderungen nachbilden müssen, damit eine sinnvolle Kontrolle und Steuerung dieser autonomen adaptiven Systeme möglich ist.

Gleichermaßen gilt diese Herausforderung für die Erkennung und Meldung von Fehlerzuständen des Systems. Hier gibt es keine vollständig schon im Voraus analysierbaren Kausalketten mehr, vielmehr muss die Bewertung auf Basis der aktuellen Konfiguration bzw. des aktuellen Zustands des Systems getroffen werden.

Bisher gibt es für komplexe technische System keine zufriedenstellende Lösung, die Verfahren der künstlichen Intelligenz wie den Einsatz von adaptiven Systemen mit traditionellem Engineering und Leittechniksystemen verbindet.

Diskutiert wird der Einsatz eines "Digitalen Zwillings" (Digital Twin), der den Zustand solcher Systeme simuliert und daraus Auswertungen bezüglich des Zustands des Systems ermöglicht. Ein solcher konventioneller Ansatz bietet jedoch nicht die Möglichkeit, im Fehlerfall eine automatische Analyse der grundlegenden Fehlerursache und Handlungsmöglichkeiten durchzuführen.

Komplexe technische Systeme sind üblicherweise mit Leittechniksystemen versehen, die den Zustand der Anlage überwachen und Fehlfunktionen melden. Dabei werden Abweichungen vom gewünschten Betriebszustand einer technischen Komponente des Systems gemeldet. Beispielsweise werden bei Ausfall eines Drucksensors oder bei Überschreitung von Grenzwerten des gemessenen Drucks Alarmmeldungen erzeugt. Basierend auf den eingehenden singulären Fehlermeldungen findet jedoch kein Rückschluss auf die verbleibende Funktionalität der technischen Anlage statt. In vielen Fällen ist eine schnelle Reaktion des Bedieners erforderlich, um die notwendigen Reaktionen auf die Störung einzuleiten.

Andere Beispiele für das Erfordernis einer dynamischen Systemanalyse und -steuerung beim Einsatz von adaptiven Systemkomponenten finden sich im Automotivebereich beispielsweise bei Fahrassistenzsystemen, im medizinischen Bereich beim Krankenhausmanagement, in der pharmazeutischen Forschung bei der Medikamentenentwicklung, im Bankenbereich beim Geldmanagement wie beispielsweise der Füllstandüberwachung bei Geldautomaten, im Handel (Retail) beim Kunden- und Sortimentsmanagement. In all diesen Bereichen finden sich adaptive Elemente und Prozesse, die durch nicht-lineare, dynamische Kenngrößen beeinflusst werden, wie zum Beispiel Kundenwünsche in der Textilindustrie durch die sich stetig ändernde Mode oder die Änderung der Jahreszeiten.

Die der Erfindung zu Grunde liegende Aufgabe besteht nun darin, ein System zur verlässlichen Steuerung und Überwachung eines cyber-physikalischen Systems mit adaptiven Systemkomponenten zu schaffen, das sich durch eine hohe Stabilität und Sicherheit auszeichnet.

Diese Aufgabe wird hinsichtlich eines Systems durch die Merkmale des Patentanspruchs 1, und hinsichtlich eines Verfahrens durch die Merkmale des Patentanspruchs 8 erfindungsgemäß gelöst. Die weiteren Ansprüche betreffen bevorzugte Ausgestaltung der Erfindung.

Die Erfindung betrifft im Wesentlichen ein System zur Überwachung und Steuerung eines adaptiven cyber-physikalischen Systems bestehend aus einer oder mehreren Systemkomponenten, bei dem ein Engineering-System mit einem Monitoring- und Kontrollmodul verbunden ist, das ausgebildet ist, Daten von den Systemkomponenten zu erhalten und zu verarbeiten und die verarbeiteten Daten und daraus generierte Informationen an das Engineering-System weiterzugeben, wobei das Engineering-System ausgebildet ist, aufgrund der vom Monitoring- und Kontrollmodul erhaltenen Daten Leittechnikbilder in einem Leit- und Steuersystem zu aktualisieren.

Das Engineering System ist somit in der Lage, Rekonfigurationsentscheidungen des adaptiven Systems, die mittels Verfahren der künstlichen Intelligenz getroffen werden, und neu erlernte Verhaltensweisen der Komponenten nachzuverfolgen, entsprechend Aktualisierungen der Leittechnikbilder vorzunehmen und damit eine genaue Überwachung und Steuerung des Systemzustands für den Systembetreiber zu ermöglichen. Insbesondere können dynamische und nicht-lineare Änderungen, wie sie für adaptive Systeme typisch sind, genau und präzise nachverfolgt und in entsprechenden Graphiken (Leittechnikbilder) abgebildet werden.

Gemäß einer vorteilhaften Weiterentwicklung ist das Leit- und Steuermodul mit den Systemkomponenten des adaptiven Systems verbunden und ausgebildet, von den Systemkomponenten Daten zu erhalten und zu verarbeiten.

Vorteilhafterweise ist das Engineering-System mit den Systemkomponenten verbunden und ausgebildet, an die Systemkomponenten Daten zu übertragen und damit die Systemkomponenten zu steuern.

Gemäß einer weiteren Ausgestaltung der Erfindung, ist das Leit- und Steuersystem mit den Systemkomponenten verbunden und ausgebildet, an die Systemkomponenten Daten zu übertragen und damit die Systemkomponenten zu steuern.

Des Weiteren kann das Engineering-System einen Fehlermodellgenerator umfassen zur Generierung von Fehlermodellen des adaptiven Systems aufgrund der von dem Monitoring- und Kontrollmodul eingehenden Daten.

In einer weiteren vorteilhaften Ausgestaltung der Erfindung umfasst das Engineering-System einen Leit- und

Steuersystemkonfigurator, der ausgebildet ist, Leittechnikbilder Graphen, Diagramme, Tabellen, etc.) zu erzeugen und zu verarbeiten.

Gemäß einer Weiterentwicklung der Erfindung, ist ein "digitaler Zwilling" des adaptiven Systems vorgesehen, der ausgebildet ist aufgrund von in der Planungsphase generierten Konfigurationsdaten das adaptive System während der Betriebsphase zu simulieren.

Gemäß eines zweiten Aspekts betrifft die Erfindung ein Verfahren zur Überwachung und Steuerung eines adaptiven cyber-physikalischen Systems bestehend aus einer oder mehreren Systemkomponenten, bei dem ein Engineering-System mit einem Monitoring- und Kontrollmodul verbunden ist, das Daten von den Systemkomponenten erhält und verarbeitet und die verarbeiteten Daten und daraus generierte Informationen an das Engineering-System weitergibt, wobei das Engineering-System aufgrund der vom Monitoring- und Kontrollmodul erhaltenen Daten Leittechnikbilder in einem Leit- und Steuersystem aktualisiert.

In einer vorteilhaften Ausgestaltung des erfindungsgemäßen Verfahrens ist das Leit- und Steuermodul mit den Systemkomponenten des adaptiven Systems verbunden und erhält von den Systemkomponenten Daten und verarbeitet diese.

Vorteilhafterweise ist das Engineering-System mit den Systemkomponenten verbunden und überträgt an die Systemkomponenten Daten, um damit die Systemkomponenten zu steuern.

In einer weiteren Ausgestaltung des erfindungsgemäßen Verfahrens ist das Leit- und Steuersystem mit den Systemkomponenten verbunden und überträgt Daten an die Systemkomponenten, um damit die Systemkomponenten zu steuern.

Gemäß einer vorteilhaften Weiterentwicklung des erfindungsgemäßen Verfahrens umfasst das Engineering-System einen Fehlermodellgenerator, der Fehlermodelle des adaptiven Systems aufgrund der von dem Monitoring- und Kontrollmodul übermittelten Daten generiert.

Gemäß eines dritten Aspekts betrifft die Erfindung ein Engineering-System, das ausgebildet ist zur Verwendung in einem System zur Überwachung und Steuerung eines adaptiven cyber-physikalisches Systems nach einem oder mehreren der Ansprüche 1 bis 7.

Gemäß eines vierten Aspekts betrifft die Erfindung ein Leit-und Steuersystem, das ausgebildet ist zur Verwendung in einem System zur Überwachung und Steuerung eines adaptiven cyber-physikalisches Systems nach einem oder mehreren der Ansprüche 1 bis 7.

Gemäß eines fünften Aspekts betrifft die Erfindung ein Computerprogrammprodukt, das einen und/oder mehrere ausführbare Computercodes enthält zur Ausführung des Verfahrens nach einem oder mehreren der Ansprüche 8 bis 12.

Nachfolgend wird die Erfindung anhand von in der Zeichnung dargestellten Ausführungsbeispielen näher erläutert. Dabei zeigt:
- Figur 1: eine Übersichtsdarstellung zur Erläuterung eines erfindungsgemäßen Systems;
- Figur 2: ein Ablaufdiagramm zur Erläuterung eines Engineering-Systems gemäß der Erfindung;
- Figur 3: ein Blockdiagram zur Erläuterung eines optionalen Ausführungsdetails des erfindungsgemäßen Systems;
- Figur 4: ein weiteres Blockdiagramm zur Erläuterung eines zweiten optionalen Ausführungsdetails des erfindungsgemäßen Systems.

Zusätzliche Merkmale, Aspekte und Vorteile der Erfindung oder ihrer Ausführungsbeispiele werden durch die ausführliche Beschreibung in Verbindung mit den Ansprüchen ersichtlich.

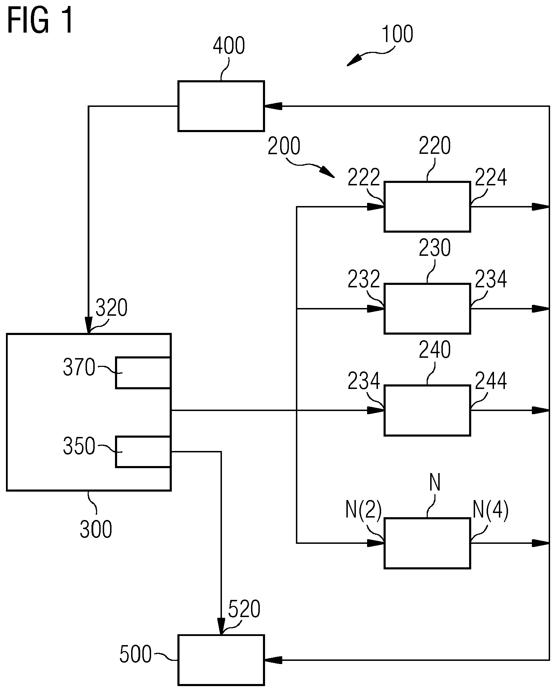

Fig. 1 zeigt ein System 100 zur Überwachung und Steuerung eines adaptiven Systems 200 mit den Komponenten 220, 230, 240, ... (N). Die Komponenten 220, 230, 240, ... 250 des adaptiven Systems 200 weisen Schnittstellen 222, 232, 242, ... 252 auf, die sie mit dem Engineering System 300 zur Datenübertragung verbinden. Durch die Schnittstellen 222, 322, 242, ... (N)2 wird die notwendige Infrastruktur und Konfiguration in den Komponenten 220, 230, 240, ... 250 sicherstellt. Ein Monitoring- und Kontrollmodul 400 ist über Schnittstellen 224, 234, 244, ... (N)4 gleichfalls mit den Komponenten 220, 230, 240, ... (N) des adaptiven Systems 200 verbunden und erhält von den Komponenten 220, 230, 240 ... (N) Daten mit Informationen über den Betriebszustand, gelerntes Verhalten, die jeweilige Konfiguration sowie Planungsszenarien der Komponenten 220, 230, 240 ... (N). Das Monitoring- und Kontrollmodul 400 ist mit dem Engineering-System 300 über eine Schnittstelle 320 verbunden und leitet die gesammelten und gegebenenfalls weiterverarbeiteten und aggregierten Daten und Informationen an das Engineering-System 300 weiter. Das Engineering-System 300 verarbeitet die erhaltenen Daten und Informationen und kommuniziert mit einem Leit- und Steuersystem (SCADA System) 500 über eine Schnittstelle 520. In Abhängigkeit von den erhaltenen und verarbeiteten Daten und Informationen legt das Engineering-System 300 fest, ob Änderungen oder Aktualisierungen (Updates) im Leit- und Steuersystem (SCADA System) 500 erforderlich sind.

Vorteilhafterweise weist das Engineering-System 300 hierzu einen Leit- und Steuersystemkonfigurator 350 auf. Dieser Konfigurator 350 kann weiterhin so ausgebildet sein, dass er für komplexe Systeme wie beispielsweise Industrieanlagen Leittechnikbilder (Graphen, Diagramme, Tabellen, etc.) erzeugt. Weiterhin kann das Engineering-System 300 einen Fehlermodellgenerator 370 enthalten. Darüber hinaus können die einzelnen Systemkomponenten 220, 230, 240, ... (N) separat und/oder parallel und/oder seriell und/oder netzwerkartig über die Schnittstellen 224, 234, 244, ... (N) mit dem Leit-und Steuersystem 500 kommunizieren und Daten austauschen. Neben den angegebenen Schnittstellen 224, 234, 244, ... (N) sind jedoch auch noch weitere Schnittstellen, die in der Fig. 1 nicht angegeben sind, möglich. Darüber hinaus kann das Leit- und Steuersystem 500 auch direkt über die angegebenen Schnittstellen oder weitere Schnittstellen mit den Systemkomponenten 220, 230, 240, ... (N) des adaptiven Systems 200 direkt kommunizieren und Daten austauschen, um damit Betriebszustände der Systemkomponenten 224, 234, 244, ... (N) zu verändern im Rahmen bekannter Regelungs- und Steuerungskreisläufe.

Das adaptive System 200 nutzt basierend auf Planungsszenarien die Konfigurationsmöglichkeiten seiner Komponenten 220, 230, 240, ... (N) zur Lösung der ihm übertragenen Aufgaben. Es kann daher die Konfiguration der Komponenten 220, 230, 240, ... (N) verändern und an eine gestellte Aufgabe anpassen, beispielsweise eine schnelle Reaktion an neu zu definierende Produktionsvorgaben aufgrund geänderter Rahmenbedingungen (Änderung von Kundenwünschen, Lieferschwierigkeiten von Grundkomponenten in der chemischen Produktion, Preisschwankungen von Bauelementen, etc.) Diese Rekonfigurationsmöglichkeiten eines adaptiven Systems 200 wird erfindungsgemäß im Engineering-System 300 berücksichtigt.

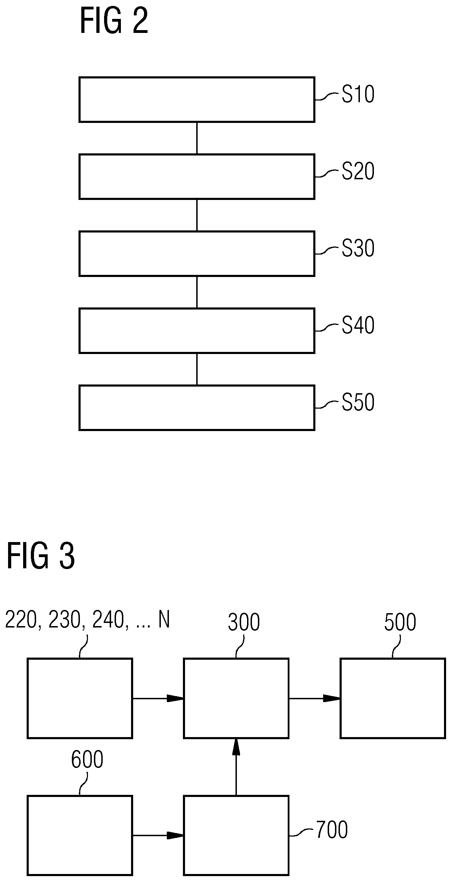

In Figur 2 ist ein Ablaufdiagramm zur Funktion des Engineering-Systems 300 dargestellt.

In einem Schritt S10 wird das Engineering-System 300 während der Laufzeit des adaptiven Systems 200 aktiviert. Es enthält in einem Fehlermodellgenerator 370 Algorithmen zur Generierung eines Fehlermodells und zur Erstellung von Leittechnikbildern (Diagramme, Graphiken, Tabellen, etc.).

In einem Schritt S20 erhält das Engineering-System 100 von dem Monitor- und Kontrollmodul 400 Informationen über die Systemkomponenten 220, 230, 240, ... (N) bezüglich ihres Zustandes, ihres gelernten Verhaltens sowie weitere Planungsinformationen, die entweder direkt von den Komponenten 220, 230, 240, ... (N) generiert worden sind, oder von dem Kontrollmodul 400 mittels eines hier nicht näher beschriebenen Algorithmus erstellt worden sind.

In einem Schritt S30 erfasst das Engineering-System 300 aus den von dem Monitor- und Kontrollmodul 400 weitergegebenen Informationen den Zustand des adaptiven Systems 200. Darüber hinaus ist es im Rahmen der Erfindung auch möglich, dass das Engineering-System 300 direkt mit den einzelnen Komponenten 220, 230, 240, ..., (N) kommuniziert, entweder mit allen Komponenten 220, 230, 240, ..., (N) gleichzeitig, oder mit einer einzelnen oder mehreren ausgewählten Komponente(n).

In einem Schritt S40 erstellt das Engineering-System 300 notwendige Änderungen an den Fehlermodellen und den Leittechnikbildern, die in dem Fehlermodellgenerator 370 und dem Leit-und Steuersystem-Konfigurator 350 gespeichert sind.

In einem Schritt S50 werden die mittels vorgegebener Algorithmen durchgeführten Aktualisierungen (Updates) der Leittechnikbilder und des Fehlerwarnsystems vom Engineering-System 300 an das Leit- und Steuersystem 500 oder auch an das Monitor- und Kontrollmodul 400 weitergegeben.

Fig. 3 zeigt ein Ablaufdiagramm zur Generierung und Aktualisierung (Update) von Leittechnikbildern, wie sie im Leit- und Steuersystem (SCADA System) 500 dargestellt werden. Basierend auf den Informationen über die Systemkomponenten 220, 230, 240, ... (N) wird vom Engineering System 300 ein dem aktuellen Systemzustand entsprechendes Leittechnikbild (Graphik, Diagramm, Tabelle, etc.) generiert und im Leit- und Steuersystem (SCADA) 500 dargestellt. Das generierte Leittechnikbild zeigt beispielsweise die aktuell verwendeten Komponenten 220, 230, 240, ... (N) des Systems 200 an, aber auch den Gesamtsystemzustand. Weiterhin kann die Funktion der einzelnen Komponenten 220, 230, 240, ... (N) im Hinblick auf die Produktionsziele dargestellt werden. Möglich sind auch Vergleiche zu historischen Daten, die in Systembibliotheken und/oder anderen Datenbanken gespeichert sind. Damit kann sichergestellt werden, dass der Betreiber einer Anlage jederzeit eine vollständige und sinnvolle Darstellung des Produktionsbetriebs erhält. Insbesondere ist ein Vergleich zwischen den Planungsinformationen 600 und Zielvorgaben 700 möglich, so dass bei einer Abweichung zwischen dem aktuellen Zustand und den Planungsszenarien Steuerbefehle an die einzelnen Komponenten 220, 230, 240, ... (N) ausgegeben werden können, um ihr Betriebsverhalten so zu verändern, dass die Zielvorgaben erreicht werden können.

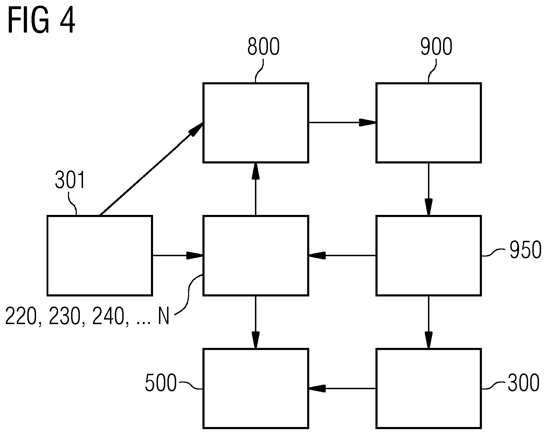

Fig. 4 zeigt eine Ausführungsvariante, bei der das adaptive System 200 sich eines "Digitalen Zwillings" 800 bedient, der synchron zum Betrieb das adaptive cyber-physikalische Systems 200 digital spiegelt, d.h. simuliert und den Input für eine Planungskomponente 900 liefert, die über einen Konfigurationsmanager 950 auf die Systemkomponenten 220, 230, 240, ... (N) zurückwirkt und diese entsprechend der Planung steuert. In dieser Ausführung tritt der Konfigurationsmanager 950 während des Betriebs des adaptiven Systems 200 an die Stelle der direkten Verbindung des Engineering-Systems 300 zu den Komponenten wie in Fig. 1 dargestellt (online-Betrieb). In der Phase vor der Inbetriebnahme des adaptiven Systems 200 (Offline-Phase) kann das Engineering-System 301 jedoch direkt mit den Systemkomponenten 220, 230, 240, ... (N) kommunizieren, um diese zu programmieren und zu konfigurieren. Zudem kommuniziert das Engineering System 300 direkt mit dem Leit- und Steuersystem (SCADA System) 500.

Entsprechend der vorliegenden Erfindung wird ein Engineering-System 300 während des Betriebs eines adaptiven Systems 200 bereitstellt. Hierdurch ist eine dynamische Überwachung und Steuerung des adaptiven Systems 200 während des Betriebs möglich, so dass die Sicherheit deutlich erhöht wird, da jederzeit der aktuelle Zustand des Gesamtsystems 200 dargestellt werden kann.

Das Engineering System 300 ist in der Lage,
Rekonfigurationsentscheidungen des adaptiven Systems 200, die mittels Verfahren der künstlichen Intelligenz getroffen werden, und neu erlernte Verhaltensweisen der Komponenten 220, 230, 240 ... (N) nachzuverfolgen, entsprechend Aktualisierungen des Fehlermodellgenerators 370 und der Leittechnikbilder vorzunehmen und damit eine genaue Überwachung und Steuerung des Systemzustands für den Systembetreiber zu ermöglichen. Insbesondere können dynamische und nicht-lineare Änderungen, wie sie für adaptive Systeme typisch sind, genau und präzise nachverfolgt und in entsprechenden Graphiken (Leittechnikbilder) abgebildet werden.

Durch die vorliegende Erfindung kann somit aufgrund des Datenflusses zwischen den einzelnen Komponenten 220, 230, 240 ... (N) des adaptiven Systems 200 und dem Engineering-System 300 eine dynamische Anpassung der Systemdarstellung an eine Rekonfiguration oder Zieländerung des adaptiven Systems 200 erfolgen. Dies ermöglicht eine kontinuierliche Aktualisierung (Updatefähigkeit) von Leittechnikbildern wie Graphiken, Tabellen, Diagramme, etc., die den Zustand des aktuellen adaptiven Systems 200 wiedergeben bzw. mit historischen Datenbildern (SCADA Bilder) vergleichen. Des Weiteren findet ein Datenaustausch mit dem Fehlermodellgenerator 370 statt. Dadurch ist eine Konvergenz zwischen dem tatsächlichen aktuellen Zustand (augenblickliche Konfiguration) des adaptiven Systems und dessen informatorischer und graphischer Darstellung gewährleistet. Die Aktualisierung des Fehlermodellgenerators 370 erlaubt eine aussagefähige Interpretation von Fehlerfällen, insbesondere im Vergleichsmodus mit historischen Daten.

In einer Weiterentwicklung der Erfindung ist vorgesehen, dass neben adaptiven Systemkomponenten 220, 230, 240 ... (N), die das adaptive System 200 bilden, auch ein traditionelles System bestehend aus Systemkomponenten zu einem Gesamtsystem zu integrieren, wobei dieses Gesamtsystem von dem Engineering-System 300 überwacht und gesteuert wird. Bei der Steuerung und Überwachung des traditionellen Systems kann das Engineering-System 300 auf bekannte Prozesse und Abläufe zurückgreifen und diese mit der hier beschriebenen dynamischen Steuerung des adaptiven Systems 200 verbinden.

## Patentansprüche

1. System (100) zur Überwachung und Steuerung eines adaptiven cyber-physikalischen Systems (200) bestehend aus einer oder mehreren Systemkomponenten (220, 230, 240, ... N), bei dem ein Engineering-System (300) mit einem Monitoring- und Kontrollmodul (400) verbunden ist, das ausgebildet ist, Daten von den Systemkomponenten (220, 230, 240, ... N) zu erhalten und zu verarbeiten und die verarbeiteten Daten und daraus generierte Informationen an das Engineering-System (300) weiterzugeben, wobei das Engineering-System (300) ausgebildet ist, aufgrund der vom Monitoring- und Kontrollmodul (400) erhaltenen Daten Leittechnikbilder in einem Leit- und Steuersystem (500) zu aktualisieren.

2. System nach Anspruch 1, **dadurch gekennzeichnet, dass** das Leit- und Steuermodul (500) mit den Systemkomponenten (220, 230, 240, ... N) des adaptiven Systems (200) verbunden ist und ausgebildet ist, von den Systemkomponenten (220, 230, 240, ... N) Daten zu erhalten und zu verarbeiten.

3. System nach Anspruch 1 oder 2, **dadurch gekennzeichnet, dass** das Engineering-System (300) mit den Systemkomponenten (220, 230, 240, ... N) verbunden ist und ausgebildet ist, an die Systemkomponenten (220, 230, 240, ... N) Daten zu übertragen und damit die Systemkomponenten (220, 230, 240, ... N) zu steuern.

4. System nach einem der vorhergehenden Ansprüche, **dadurch gekennzeichnet, dass** das Leit- und Steuersystem (500) mit den Systemkomponenten (220, 230, 240, ... N) verbunden ist und ausgebildet ist, an die Systemkomponenten (220, 230, 240, ... N) Daten zu übertragen und damit die Systemkomponenten (220, 230, 240, ... N) zu steuern.

5. System nach einem oder mehreren der vorhergehenden Ansprüche, **dadurch gekennzeichnet, dass** das Engineering-System (300) einen Fehlermodellgenerator (370) umfasst zur Generierung von Fehlermodellen des adaptiven Systems (200) aufgrund der von dem Monitoring- und Kontrollmodul (400) eingehenden Daten.

6. System nach einem oder mehreren der vorhergehenden Ansprüche, **dadurch gekennzeichnet, dass** das Engineering-System (300) einen Leit- und Steuersystemkonfigurator (350) umfasst, der ausgebildet ist, Leittechnikbilder, insbesondere Graphen, Diagramme, Tabellen, zu erzeugen und zu verarbeiten.

7. System nach einem oder mehreren der vorhergehenden Ansprüche, **dadurch gekennzeichnet, dass** ein digitaler Zwilling des adaptiven Systems (200) vorgesehen ist, der ausgebildet ist, aufgrund von in der Planungsphase generierten Konfigurationsdaten das adaptive System (200) während der Betriebsphase zu simulieren.

8. Verfahren zur Überwachung und Steuerung eines adaptiven cyber-physikalischen Systems (200) bestehend aus einer oder mehreren Systemkomponenten (220, 230, 240, ... N), bei dem ein Engineering-System (300) mit einem Monitoring- und Kontrollmodul (400) verbunden ist, das Daten von den Systemkomponenten (220, 230, 240, ... N) erhält und verarbeitet und die verarbeiteten Daten und daraus generierte Informationen an das Engineering-System (300) weitergibt, wobei das Engineering-System (300) aufgrund der vom Monitoring- und Kontrollmodul (400) erhaltenen Daten Leittechnikbilder in einem Leit- und Steuersystem (500) aktualisiert.

9. Verfahren nach Anspruch 8, **dadurch gekennzeichnet, dass** das Leit- und Steuermodul (500) mit den Systemkomponenten (220, 230, 240, ... N) des adaptiven Systems (200) verbunden ist und von den Systemkomponenten (220, 230, 240, ... N) Daten erhält und verarbeitet.

10. Verfahren nach Anspruch 8 oder 9, **dadurch gekennzeichnet, dass** das Engineering-System (300) mit den Systemkomponenten (220, 230, 240, ... N) verbunden ist und an die Systemkomponenten (220, 230, 240, ... N) Daten zu überträgt und damit die Systemkomponenten (220, 230, 240, ... N) steuert.

11. Verfahren nach einem der vorhergehenden Ansprüche 8 bis 10, **dadurch gekennzeichnet, dass** das Leit- und Steuersystem (500) mit den Systemkomponenten (220, 230, 240, ... N) verbunden ist und an die Systemkomponenten (220, 230, 240, ... N) Daten überträgt und damit die Systemkomponenten (220, 230, 240, ... N) steuert.

12. Verfahren nach einem oder mehreren der vorhergehenden Ansprüche 8 bis 11, **dadurch gekennzeichnet, dass** das Engineering-System (300) einen Fehlermodellgenerator (370) umfasst, der Fehlermodelle des adaptiven Systems (200) aufgrund der von dem Monitoring- und Kontrollmodul (400) eingehenden Daten generiert.

13. Engineering-System (300) ausgebildet zur Verwendung in einem System zur Überwachung und Steuerung eines adaptiven cyber-physikalisches Systems (200) nach einem oder mehreren der Ansprüche 1 bis 7.

14. Leit- und Steuersystem (500) ausgebildet zur Verwendung in einem System zur Überwachung und Steuerung eines adaptiven cyber-physikalisches Systems (200) nach einem oder mehreren der Ansprüche 1 bis 7.

15. Computerprogrammprodukt (1000), das einen und/der mehrere ausführbare Computercodes enthält zur Ausführung des Verfahrens nach einem oder mehreren der Ansprüche 8 bis 12.
